(19) Europäisches Patentamt / European Patent Office / Office européen des brevets

(11) **EP 1 645 734 B1**

(12) **FASCICULE DE BREVET EUROPEEN**

(45) Date de publication et mention
de la délivrance du brevet:
**23.04.2008 Bulletin 2008/17**

(51) Int Cl.:
**F02B 23/06** *(2006.01)*

(21) Numéro de dépôt: **05300798.5**

(22) Date de dépôt: **06.10.2005**

(54) **Moteur à combustion interne comportant un injecteur de carburant à jets optimisés**

Brennkraftmaschine mit einem Einspritzventil mit optimierten Kraftstoffspritzstrahlen

Internal combustion engine having an injector with optimised jets

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.10.2004 FR 0452296**

(43) Date de publication de la demande:
**12.04.2006 Bulletin 2006/15**

(73) Titulaire: **RENAULT S.A.S.**
**92100 Boulogne Billancourt (FR)**

(72) Inventeurs:
- **Levy, Franck**
  **91590, Guignevile sur Essone (FR)**
- **Brun, Eric**
  **78180 Montigny le Bretonneux (FR)**
- **Dehoux, Stephan**
  **92160, Antony (FR)**
- **Fasolo, Bertrand**
  **92160, Antony (FR)**

(56) Documents cités:
**DE-A1- 4 136 851**    **FR-A- 2 716 495**
**FR-A- 2 844 012**    **US-A- 3 954 089**
**US-B1- 6 553 960**

**Description**

L'invention concerne un moteur à combustion interne à injection directe, du type comportant un injecteur de carburant multi jets.

L'invention concerne plus particulièrement un moteur à combustion interne à injection directe, comportant une culasse qui porte au moins un injecteur de carburant muni à son extrémité axiale libre d'une buse d'injection comportant un nombre "i" de trous d'injection qui sont agencés annulairement suivant au moins une rangée pour pulvériser le carburant sous la forme d'une nappe d'injection constituée des "i" jets $J_i$ dissymétriques de carburant directement à l'intérieur d'un bol de combustion associé qui est réalisé dans la face supérieure d'un piston du moteur, dans lequel chaque jet $J_i$ parcourt, depuis un point I de l'injecteur jusqu'à un point d'intersection $M_i$ de l'axe de pulvérisation B du jet $J_i$ avec la paroi du bol, une longueur $L_i$, et dans lequel la distance entre deux points d'intersection $M_i$, $M_{i+1}$ de deux jets adjacents $J_i$, $J_{i+1}$ est définie par un arc correspondant à $Arc_{Ji, Jj+1}$.

On connaît de nombreux exemples de moteurs de véhicules automobiles de ce type dont on cherche tout particulièrement à améliorer les performances en réduisant parallèlement d'une part leur consommation et, d'autre part, l'émission de polluants, tels que les oxydes d'azote (NOx) et les particules de suies.

De telles améliorations peuvent notamment être obtenues en agissant sur la qualité du mélange entre les gaz d'admission et le carburant de manière à réaliser dans la chambre de combustion du moteur un mélange qui soit sensiblement homogène.

Selon une conception conventionnelle connue d'un moteur à injection directe, l'injecteur est agencé dans une position excentrée par rapport à l'axe vertical du cylindre, notamment du fait de la présence des soupapes d'admission et d'échappement.

Cependant, pour que l'injection de carburant soit effectuée le plus près possible de l'axe du cylindre dans lequel coulisse le piston, la buse ou nez de l'injecteur est alors généralement rapprochée de l'axe du cylindre, en inclinant l'axe général de l'injecteur par rapport à l'axe du cylindre.

Le document FR-A-2.844.012 décrit et représente notamment à la figure 1, un exemple de moteur à combustion interne comportant un injecteur de carburant excentré, c'est-à-dire un injecteur qui est d'une part décalé radialement par rapport à l'axe du cylindre et, d'autre part, incliné de manière que l'axe général de l'injecteur forme un angle avec l'axe du cylindre.

Lorsque l'injecteur est ainsi excentré, les différents jets de carburant injectés sont alors dissymétriques, en particulier les différents jets de carburant parcourent des longueurs différentes avant d'entrer en contact avec la paroi interne du bol de combustion. Or cela provoque un déséquilibre entre la répartition du carburant et des gaz d'admission et affecte par conséquent la qualité du mélange qui n'étant pas optimale, ne permet pas d'obtenir un mélange aussi homogène que souhaitée.

Dans un moteur à injection directe, les phénomènes principaux qui se combinent et qui permettent d'obtenir un tel mélange sensiblement homogène sont essentiellement la pulvérisation du carburant et les mouvements d'air au milieu de la charge des gaz d'admission et ceux provoqués par l'injection du carburant.

C'est la raison pour laquelle, on a notamment cherché à optimiser la répartition des jets dans le bol de combustion afin d'améliorer l'homogénéité du mélange du carburant avec les gaz d'admission.

On connaît dans l'état de la technique différentes méthodes, telles que la méthode appelée "iso-angle", qui sont susceptibles de permettre de concevoir et de fabriquer un injecteur de carburant dans lequel la répartition des jets pulvérisés est optimisée pour une application donnée et en fonction d'un certain nombre de paramètres de fonctionnement déterminés, notamment de la chambre de combustion du moteur.

Selon la méthode "iso-angle", la buse d'injection de l'injecteur comporte des trous d'injection qui sont répartis annulairement de manière régulière autour de la buse selon au moins une rangée de trous de telle sorte que les angles aigus compris entre chacun des axes principaux de pulvérisation des jets de carburant soient tous égaux entre eux.

Dans les méthodes connues de l'état de la technique, chaque jet est uniquement assimilé à une droite correspondant à l'axe principal de pulvérisation du jet de carburant, sans qu'il soit tenu compte de l'action des mouvements des gaz d'admission sur les jets et dans la méthode "iso-angle" sans considérer la longueur parcourue par chacun des jets avant d'entrer en contact avec la paroi du bol.

Or on a pu déterminer que les jets d'injection "s'enroulent" dans le bol de combustion sous l'action des mouvements des gaz d'admission, et plus particulièrement du mouvement de "swirl" qui se forme dans le bol de combustion autour d'un axe sensiblement confondu ou parallèle à l'axe du cylindre.

L'invention propose donc un moteur à combustion interne comportant un injecteur de carburant dont les caractéristiques des trous d'injection sont déterminées de manière à prendre en compte cet effet d'enroulement des jets de carburant pour optimiser la répartition des jets et donc l'obtention d'un mélange sensiblement homogène.

Dans ce but, l'invention propose un moteur à combustion interne du type décrit précédemment, caractérisé en ce que les trous de la buse d'injection sont réalisés de manière que la somme S de la longueur $L_i$ et de l'$Arc_{Ji, Ji+1}$ de chaque jet $J_i$ soit égale à une constante.

La somme S est encore appelée la "longueur libre" du jet.

Avantageusement, la longueur $L_i$ de chaque jet $J_i$ est notamment déterminée par le diamètre ou la section du trou correspondant de la buse d'injection.

Selon d'autres caractéristiques de l'invention :

- ladite longueur $L_i$ est la longueur du segment de droite qui relie suivant l'axe de pulvérisation B du jet $J_i$ le point I de l'injecteur 38 au un point d'intersection $M_i$ ;
- l'Arc$_{Ji, Ji+1}$ est déterminé conformément à la relation :

$$Arc_{Ji, Ji+1} = p_{Ji, Ji+1} \times Rm$$

dans laquelle $p_{Ji, Ji+1}$ est l'angle aigu exprimé en radians compris entre deux jets adjacents $J_i$ et $J_{i+1}$,
et dans laquelle Rm est le rayon moyen du bol de combustion ;

- les trous de la buse d'injection sont répartis angulairement autour de l'axe principal A de l'injecteur de manière à ce que la somme S soit égale à une constante ;
- le diamètre de chaque trou de la buse d'injection est déterminé en fonction de la longueur $L_i$ du jet $J_i$ ;

Grâce à l'invention, le carburant de chaque jet d'injection se mélange de manière optimale avec les gaz d'admission.

Plus précisément, chaque jet est susceptible, notamment sous l'action de l'effet de swirl, de se développer de manière équivalente, c'est-à-dire avec une "longueur libre" identique, en "s'enroulant" selon le sens du mouvement tourbillonnaire ce qui permet d'obtenir une répartition optimale des jets de carburant bien qu'ils soient dissymétriques et donc un mélange sensiblement homogène.

Avantageusement, le moteur comporte des moyens pour produire à l'admission un mouvement tourbillonnaire ordonné du type « swirl ».

Grâce à l'invention, on améliore l'échange entre le carburant injecté et les gaz d'admission du moteur à combustion interne et on augmente les performances du moteur tout en réduisant la formation de polluants, tels que les suies et autres hydrocarbures imbrûlés constituant les fumées noires en sortie d'échappement.

D'autres caractéristiques et avantages de l'invention apparaîtront à la lecture de la description détaillée qui suit pour la compréhension de laquelle on se reportera aux figures annexées parmi lesquelles :

- la figure 1 est une vue schématique en coupe axiale qui représente un cylindre d'un moteur à combustion interne ;
- la figure 2 est une vue schématique en perspective de l'injecteur de la figure 1 dont les trous de la buse sont réalisés conformément à l'invention et qui représente la répartition des jets de longueur libre équivalente ;
- la figure 3 est une vue de dessus de la figure 2 sans l'injecteur qui représente la projection géométrique des jets dans un plan horizontal d'injection.

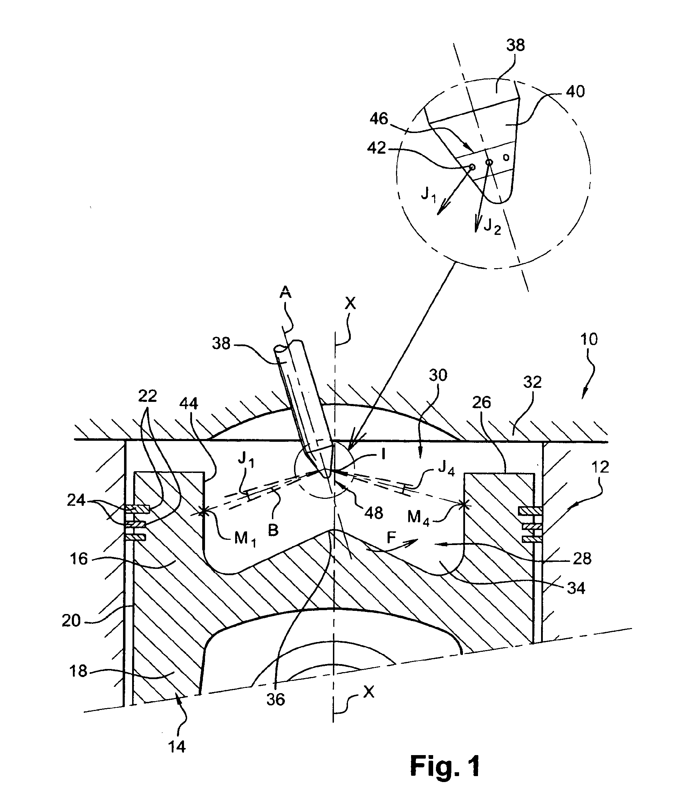

On a représenté schématiquement à la figure 1, une partie d'un moteur à combustion interne 10 du type à injection directe.

La figure 1 représente plus particulièrement un cylindre 12 d'axe X-X vertical et un piston 14 apte à coulisser axialement dans le cylindre 12 du moteur 10 en décrivant un mouvement de va-et-vient. Le piston 14 comporte une tête 16 dans son tronçon supérieur et une jupe axiale 18 dans son tronçon inférieur.

La paroi cylindrique externe 20 de la tête 16 comporte des gorges annulaires périphériques 22 qui reçoivent des segments 24.

Le piston 14 comporte dans sa face supérieure 26 une cavité ou bol de combustion 28 qui délimite la partie inférieure d'une chambre de combustion 30 et dont la partie supérieure est délimitée par la culasse 32 du moteur.

Le bol de combustion 28 présente ici une symétrie de révolution autour d'un axe vertical qui est confondu avec l'axe X-X du cylindre 12.

Le bol de combustion 28 comporte de préférence une gorge annulaire périphérique 34 et un bossage central 36, ici globalement en forme de calotte conique.

La culasse 32 comporte au moins un conduit d'admission d'air qui débouche par un orifice d'entrée obturé par une soupape d'admission (non représentés) dans la chambre de combustion 30, et au moins un conduit d'échappement des gaz brûlés qui débouche par un orifice de sortie destiné à être obturé par une soupape d'échappement (non représentée) dans la chambre de combustion 30.

La culasse 32 porte un injecteur 38 de carburant dont la buse ou nez d'injection 40 débouche directement dans la chambre de combustion 30 du moteur.

La buse d'injection 40 de l'injecteur 38 comporte un nombre "i" de trous 42 qui sont ici agencés axialement sur une rangée unique et repartis annulairement par rapport à l'axe général A de l'injecteur autour de la buse 40.

De préférence, le nombre "i" de trous 42 d'injection est supérieur ou égal à 6.

Avantageusement, les trous 42 de la buse d'injection 40 sont répartis angulairement de manière régulière autour de l'axe principal A de l'injecteur 38.

Le carburant est ainsi pulvérisé par les trous 42 sous la forme d'une nappe d'injection globalement tronconique qui est constituée par l'ensemble des jets $J_i$ correspondant au nombre "i" de trous 42.

La nappe d'injection présente un "angle de nappe" déterminé correspondant à l'ouverture au sommet du cône et qui dépend du type d'injecteur 38 et de bol de combustion 28 associé.

Le sommet de chaque jet $J_i$ est situé à proximité d'un point I qui est globalement situé au centre de la buse 40 de l'injecteur 38, sur l'axe général A de l'injecteur.

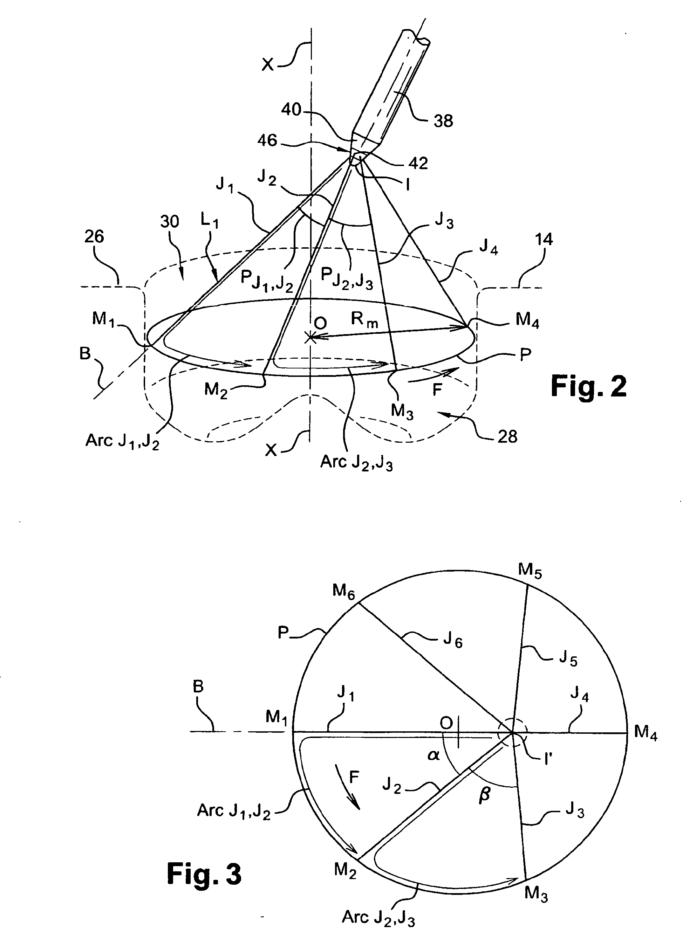

Comme on peut le voir sur les figures 1 et 2, chaque jet $J_i$ parcourt depuis le point I de l'injecteur 38 jusqu'à un point d'intersection $M_i$ de l'axe principal de pulvérisation B du jet $J_i$ avec la paroi 44 du bol 28, un segment de droite de longueur $L_i$.

Dans l'exemple de réalisation illustré, le carburant est injecté sous la forme d'une nappe d'injection déterminée par six jets $J_1$ à $J_6$ dissymétriques et qui sont globalement rectilignes suivant leurs axes de pulvérisation B respectifs.

La buse d'injection 40 comporte ainsi six trous 42 correspondants qui sont agencés annulairement et répartis axialement en une seule rangée 46 formant ici une couronne.

Les jets $J_i$ étant dissymétriques, chaque jet $J_i$ présente une longueur $L_i$ déterminée qui lui est propre et qui est fonction de nombreux paramètres et plus particulièrement du rayon du bol de combustion 28.

Chaque trou 42 est ici circulaire et de section constante ou de même diamètre mais en variante les trous sont susceptibles d'avoir des diamètres différents ou d'autres formes, telles que des formes tronconiques, et de s'étendre selon un axe principal rectiligne ou incurvé.

La distance entre deux points d'intersection $M_i$, $M_{i+1}$ respectivement d'un premier jet $J_i$ et d'un second jet $J_{i+1}$ qui lui est adjacent, par exemple suivant le sens du mouvement tourbillonnaire de "swirl", est définie par un arc soit ici Arc $_{Ji, Ji+1}$.

De préférence, l'ensemble des points d'intersection M1 à M6 de l'axe principal de chaque jet $J_i$ suivant l'axe de pulvérisation B avec la paroi 44 du bol 28 sont situés à la même cote axiale suivant l'axe X-X du cylindre 12, c'est-à-dire dans un même plan horizontal orthogonal à l'axe X-X.

En variante, la cote verticale de chacun des points M1 à M6 peut prendre toutes les valeurs possibles le long de la paroi 44 du bol 28 de manière que chaque jet $J_i$ entre en contact avec les gaz d'admission de vitesse importante.

Conformément à l'invention, les trous 42 de la buse d'injection 40 sont réalisés de manière que la somme S de la longueur $L_i$ et de l'Arc $_{Ji, Ji+1}$ de chaque jet $J_i$ soit égale à une constante.

Ladite longueur $L_i$ d'un jet $J_i$ est la longueur du segment de droite qui relie, suivant l'axe principal B du jet $J_i$, le point I de l'injecteur 38 au un point d'intersection $M_i$ dudit jet $J_i$.

De plus, l'Arc $_{Ji, Ji+1}$ est déterminé conformément à la relation :

$$\text{Arc } _{Ji, \ Ji+1} = p _{Ji, \ Ji+1} \ x \ Rm$$

dans laquelle $p_{Ji,Ji+1}$ est l'angle aigu exprimé en radians et compris entre deux jets adjacents $J_i$ et $J_{i+1}$,
et dans laquelle **Rm** est le rayon moyen du bol de combustion 28.

La valeur de l'angle aigu ($p_{Ji, Ji+1}$) est ainsi différente pour chacun des jets $J_1$ à $J_6$, et correspond par exemple, sur la projection de la figure 3, à "$\alpha$" pour les jets adjacents $J_1$ et $J_2$ ou "$\beta$" pour les jets consécutifs suivants $J_2$ et $J_3$.

Avantageusement, le bol annulaire 28 de combustion est globalement circulaire et il est ici centré sur l'axe X-X du cylindre dans lequel coulisse le piston 14.

Comme on peut le voir sur les figures 2 et 3, on a représenté de manière schématique un plan d'injection P qui est perpendiculaire à l'axe X-X du cylindre 12 et qui s'étend ainsi horizontalement en passant par l'ensemble des points d'intersection M1 à M6 des jets $J_1$ à $J_6$.

Le plan d'injection P représenté présente ici globalement une forme circulaire délimitée et passant par l'ensemble des points d'intersection M1 à M6.

Le fonctionnement d'un tel injecteur de carburant 38 est bien connu de l'état de la technique.

On rappellera que l'injection du carburant est avantageusement réalisée simultanément par tous les trous d'injection lorsque la buse comporte une rangée unique et que l'injection s'effectue sous la forme d'un nombre "i" de jets de carburant pulvérisé formant une nappe d'injection 48 déterminée.

L'injection est de préférence effectuée lorsque le piston 14 atteint sensiblement une position dite point mort haut (PMH).

Le jet $J_1$ est ainsi injecté par un des trous 42 de la buse d'injection 40 selon un axe principal B et il parcourt une longueur L1 correspondant au segment de droite compris entre le point I et le point d'intersection M1 de l'axe principal B du jet $J_1$ avec la paroi 44 du bol de combustion 28.

La flèche F indique le sens du mouvement tourbillonnaire de swirl dans le bol de combustion 28 de la chambre 30.

De la même manière, le jet $J_2$ est injecté, simultanément au jet $J_1$, par le trou 42 consécutif de la rangée 46, ici suivant la flèche F, et selon un axe principal B de jet $J_2$ qui parcourt ainsi une longueur L2 correspondant globalement au segment de droite partant du point I et se terminant au point d'intersection M2 de l'axe principal B du jet $J_2$ avec la paroi 44 du bol de combustion 28.

Selon une caractéristique importante, la longueur à parcourir pour à partir du point M1 rejoindre le point M2 adjacent correspond, ici en suivant la paroi 44 du bol de combustion 28, à un arc, plus précisément à l'Arc $_{J1, J2}$.

Il en est de même du jet $J_3$, de sorte que le point d'intersection M2 du jet $J_2$ est séparé du point d'intersection M3 du $J_3$ d'une distance correspondant à Arc $_{J2, J3}$, etc.

Les jets de carburant vont sous l'effet du mouvement tourbillonnaire de swirl s'enrouler suivant la flèche F dans le bol de combustion 28 et parcourir ainsi chacun une longueur libre correspondant à la somme S qui est définie par la relation suivante :

$$S = L_i + Arc\ _{Ji,\ Ji+1}$$

Conformément à l'invention, on a déterminé que les trous 42, notamment la position axiale et/ou angulaire de chaque trou 42, devaient être déterminées de manière que la longueur libre de chacun des jets $J_i$ soit identique pour garantir une répartition optimale du carburant et un mélange homogène du carburant avec les gaz d'admission.

On obtient ainsi que la longueur libre des jets, par exemple $J_1$ à $J_3$, est constante, soit exprimée selon la relation :

$$S = L_1 + Arc_{J1,\ J2} = L_2 + Arc_{J2,\ J3} = L_3 + Arc_{J3,\ J4} = L_i + Arc_{Ji,\ Ji+1}$$

Chaque jet va alors s'enrouler sur une longueur $Arc_{Ji,\ Ji+1}$ qui lui est propre et qui est déterminée conformément à la relation suivante :

$$Arc\ _{Ji,\ Ji+1} = p\ _{Ji+1+1}\ x\ Rm$$

dans laquelle $(p_{Ji,\ Ji+1})$ est l'angle exprimé en radians compris entre les projections verticales des deux jets adjacents $J_i$ et $J_{i+1}$ dans le plan horizontal d'injection P,

et dans laquelle **Rm** est le rayon moyen du bol de combustion 28, soit ici le rayon R du plan circulaire d'injection P de centre O.

Ainsi comme on peut le voir sur la figure 3, l'angle $p_{J1,\ J2}$ correspond à l'angle compris entre les projections des jets adjacents $J_1$ et $J_2$ correspondant respectivement aux parties de longueurs L1 et L2.

Le point I' correspond à la projection du point I de la buse d'injection 40 des jets $J_1$ à $J_6$.

En variante, le diamètre de chaque trou 42 de la buse d'injection 40 est de préférence déterminé en fonction de la longueur $L_i$ du jet $J_i$.

## Revendications

1. Moteur à combustion interne à injection directe, comportant une culasse (32) qui porte au moins un injecteur de carburant (38) muni à son extrémité axiale libre d'une buse d'injection (40) comportant un nombre "i" de trous (42) d'injection qui sont agencés annulairement suivant au moins une rangée (46) pour pulvériser le carburant, sous la forme d'une nappe d'injection (48) constituée des "i" jets ($J_i$) dissymétriques de carburant, directement à l'intérieur d'un bol de combustion (28) associé qui est réalisé dans la face supérieure (26) d'un piston (14) du moteur, dans lequel chaque jet ($J_i$) parcourt, depuis un point (I) de l'injecteur (38) jusqu'à un point d'intersection ($M_i$) de l'axe de pulvérisation (B) du jet ($J_i$) avec la paroi du bol (28), une longueur ($L_i$), et dans lequel la distance entre deux points d'intersection ($M_i$, $M_{i+1}$) de deux jets adjacents ($J_i$, $J_{i+1}$) est définie par un arc ($Arc_{Ji,\ Ji+1}$),

**caractérisé en ce que** les trous (42) de la buse d'injection (40) sont réalisés de manière que la somme (S) de la longueur ($L_i$) et de l'arc ($Arc_{Ji,\ Ji+1}$) pour chaque jet ($J_i$) soit constante.

2. Moteur selon la revendication 1, **caractérisé en ce que** ladite longueur ($L_i$) est la longueur du segment de droite qui relie suivant l'axe de pulvérisation (B) du jet ($J_i$) le point (I) de l'injecteur (38) au un point d'intersection $M_i$.

3. Moteur selon la revendication 1, **caractérisé en ce que** l'arc ($Arc_{Ji,\ Ji+1}$) est déterminé conformément à la relation :

$$\textbf{Arc}_{\textbf{JI, JI+1}} = \textbf{p}_{\textbf{JI, JI+1}} \times \textbf{Rm}$$

dans laquelle ($p_{Ji,\ Ji+1}$) est l'angle aigu exprimé en radians compris entre deux jets adjacents ($J_i$) et ($J_{i+1}$), et dans laquelle (Rm) est le rayon moyen du bol de combustion.

4. Moteur selon l'une quelconque des revendications précédentes, **caractérisé en ce que** les trous (42) de la buse d'injection (40) sont répartis angulairement autour de l'axe principal (A) de l'injecteur (38) de manière à ce que la somme (S) soit égale à une constante.

5. Moteur selon l'une quelconque des revendications précédentes, **caractérisé en ce que** le diamètre de chaque trou (42) de la buse d'injection (40) est déterminé en fonction de la longueur ($L_i$) du jet ($J_i$).

6. Moteur selon l'une quelconque des revendications précédentes, **caractérisé en ce qu'**il comporte des moyens pour produire à l'admission un mouvement tourbillonnaire ordonné du type "swirl".

**Claims**

1. Direct injection internal combustion engine, comprising a cylinder head (32) which carries at least one fuel injector (38) provided at its free axial end with an injection nozzle (40) comprising a number "i" of injection holes (42) which are arranged annularly in at least one row (46) to atomize the fuel, in the form of an injection spray (48) constituted by the "i" asymmetric fuel jets ($J_i$), directly inside an associated combustion bowl (28) which is made in the upper face (26) of a piston (14) of the engine, in which each jet ($J_i$) travels, from a point (I) on the injector (38) to a point of intersection ($M_i$) of the atomization axis (B) of the jet ($J_i$) with the wall of the bowl (28), a length ($L_i$), and in which the distance between two points of intersection ($M_i$, $M_{i+1}$) of two adjacent jets ($J_i$, $J_{i+1}$) is defined by an arc ($ArcJ_i$, $J_{i+1}$), **characterized in that** the holes (42) of the injection nozzle (40) are made so that the sum (S) of the length ($L_i$) and the arc ($ArcJ_i$, $J_{i+1}$) for each jet ($J_i$) is constant.

2. Engine according to Claim 1, **characterized in that** the said length (Li) is the length of the straight line which connects along the atomization axis (B) of the jet ($J_i$) the point (I) on the injector (38) to a point of intersection $M_i$.

3. Engine according to Claim 1, **characterized in that** the arc ($Arc_{Ji,\ Ji+1}$) is determined according to the equation:

$$\textbf{Arc}_{\textbf{Ji, Ji+1}} = \textbf{p}_{\textbf{Ji, Ji+1}} \times \textbf{Rm}$$

where ($p_{Ji,\ Ji+1}$) is the acute angle expressed in radians between two adjacent jets ($J_i$) and ($J_{i+1}$), and where (Rm) is the average radius of the combustion bowl.

4. Engine according to any one of the preceding claims, **characterized in that** the holes (42) of the injection nozzle (40) are angularly distributed about the main axis (A) of the injector (38) so that the sum (S) is a constant.

5. Engine according to any one of the preceding claims, **characterized in that** the diameter of each hole (42) of the injection nozzle (40) is determined according to the length ($L_i$) of the jet ($J_i$).

6. Engine according to any one of the preceding claims, **characterized in that** it comprises means for producing at the inlet a controlled tumbling motion of the "swirl" type.

EP 1 645 734 B1

**Patentansprüche**

1. Verbrennungsmotor mit Direkteinspritzung, der einen zylinderkopf (32) aufweist, der mindestens ein Kraftstoffeinspritzventil (38) trägt, das an seinem freien axialen Ende mit einer Einspritzdüse (40) versehen ist, die eine Anzahl "i" von Einspritzlöchern (42) aufweist, die ringförmig entlang mindestens einer Reihe (46) angeordnet Sind, um den Kraftstoff in Form einer Einspritzlage (48), die aus den "i" unsymmetrischen Kraftstoffstrahlen ($J_i$) besteht, direkt ins Innere einer zugeordneten Brennschale (28) zu sprühen, die in der Oberseite (26) eines Kolbens (14) des Motors hergestellt ist, wobei jeder Strahl ($J_i$) von einem Punkt (I) des Einspritzventils (38) bis zu einem Schnittpunkt ($M_i$) der Sprühachse (B) des Strahls ($J_i$) mit der Wand der Schale (28) eine Länge ($L_i$) zurücklegt, und wobei der Abstand zwischen zwei Schnittpunkten ($M_i$, $M_{i+1}$) zwei benachbarter Strahlen ($J_i$, $J_{i+1}$) von einem Bogen ($Arc_{Ji,Ji+1}$) definiert wird,
**dadurch gekennzeichnet, dass** die Löcher (42) der Einspritzdüse (40) so hergestellt werden, dass die Summe (S) der Länge ($L_i$) und des Bogens ($Arc_{Ji,Ji+1}$) für jeden Strahl ($J_i$) konstant ist.

2. Motor nach Anspruch 1, **dadurch gekennzeichnet, dass** die Länge ($L_i$) die Länge des Geradesegments ist, das den Punkt (I) des Einspritzventils (38) gemäß der Sprühachse (B) des Strahls ($J_i$) mit einem Schnittpunkt ($M_i$) verbindet.

3. Motor nach Anspruch 1, **dadurch gekennzeichnet, dass** der Bogen ($Arc_{Ji,Ji+1}$) gemäß der folgenden Beziehung bestimmt wird:

$$Arc_{Ji,Ji+1} = p_{Ji,Ji+1} \times Rm$$

in der ($p_{Ji,Ji+1}$) der spitze Winkel, ausgedrückt in Radian, zwischen zwei benachbarten Strahlen ($J_i$) und ($J_{i+1}$) ist, und in der (Rm) der mittlere Radius der Brennschale ist.

4. Motor nach einem der vorhergehenden Ansprüche, **dadurch gekennzeichnet, dass** die Löcher (42) der Einspritzdüse (40) winkelmäßig so um die Hauptachse (A) des Einspritzventils (38) verteilt sind, dass die Summe (S) gleich einer Konstanten ist.

5. Motor nach einem der vorhergehenden Ansprüche, **dadurch gekennzeichnet, dass** der Durchmesser jedes Lochs (42) der Einspritzdüse (40) in Abhängigkeit von der Länge ($L_i$) des Strahls ($J_i$) bestimmt wird.

6. Motor nach einem der vorhergehenden Ansprüche, **dadurch gekennzeichnet, dass** er Mittel aufweist, um auf der Ansaugseite eine geordnete Wirbelbewegung vom Typ "Swir1" zu erzeugen.

7

**Fig. 1**

Fig. 2

Fig. 3

**RÉFÉRENCES CITÉES DANS LA DESCRIPTION**

**Documents brevets cités dans la description**

- FR 2844012 A